Europäisches Patentamt

European Patent Office

Office européen des brevets

(19)

(11) Numéro de publication : **0 034 535**
**B1**

(12) **FASCICULE DE BREVET EUROPÉEN**

(45) Date de publication du fascicule du brevet :
17.10.84

(51) Int. Cl.³ : **G 05 D 23/24**

(21) Numéro de dépôt : 81400222.6

(22) Date de dépôt : 13.02.81

(54) Thermostat électronique perfectionné notamment pour la commande d'un convecteur électrique.

(30) Priorité : 19.02.80 FR 8003557

(43) Date de publication de la demande :
26.08.81 Bulletin 81/34

(45) Mention de la délivrance du brevet :
17.10.84 Bulletin 84/42

(84) Etats contractants désignés :
BE DE GB IT

(56) Documents cités :
FR-A- 2 294 607
FR-A- 2 418 421
FR-A- 2 424 577
FR-A- 2 427 025

(73) Titulaire : FINIMETAL, Société dite
25, Rue de Clichy
F-75009 Paris (FR)

(72) Inventeur : Besson, Jean-Louis
5, rue Pierre Curie Vielaines
F-10800 Saint-Julien-Les-Villas (FR)

(74) Mandataire : Polus, Camille et al
c/o Cabinet Lavoix 2, Place d'Estienne d'Orves
F-75441 Paris Cedex 09 (FR)

Jouve, 18, rue St-Denis, 75001 Paris, France

## Description

La présente invention se rapporte aux thermostats et concerne plus particulièrement les thermostats électroniques destinés à être associés à des installations de chauffage qui comportent notamment des convecteurs électriques dont il y a lieu de commander le régime.

Dans les installations de chauffage actuelles comportant des thermostats, associés à des radiateurs ou convecteurs, le point de consigne de l'appareil à commander est réglé manuellement au moyen d'un potentiomètre incorporé au thermostat.

Si un utilisateur veut réduire momentanément la température d'une pièce comportant par exemple deux convecteurs, il doit assurer séparément le réglage du potentiomètre associé à chaque convecteur.

Pour modifier la température de toutes les pièces d'un appartement, il doit répéter l'opération de réglage autant de fois que l'installation comporte de radiateurs, ce qui la rend fastidieuse, surtout lorsqu'il s'agit de régler les radiateurs plusieurs fois au cours d'une même journée dans le but, par exemple, d'éviter de trop chauffer son logement pendant les heures de la journée auxquelles les occupants sont absents.

Par ailleurs, la multiplicité des réglages entraîne un risque d'oubli de sorte que certaines parties du logement sont chauffées inutilement au détriment des impératifs d'économie d'énergie.

Pour remédier à cet inconvénient, il est déjà connu d'après le FR-A-2 424 577 d'équiper l'installation de chauffage central d'une commande centralisée permettant, par une horloge de commander à distance la commutation d'une consigne de fonctionnement normal de la régulation des convecteurs à une consigne de veille, ce qui par l'intermédiaire de deux fils pilotes permet de commander simultanément tous les convecteurs de l'installation. Dans ce cas, on ne peut donc commander automatiquement que deux régimes de chauffe.

Le FR-A-2 427 025 décrit un montage de commande analogue, à cette différence près, que la commutation entre les deux régimes de chauffe est obtenue sous la commande d'un élément photosensible remplaçant l'horloge. Dans ce cas, il y a donc des régimes de chauffe distincts pour le jour et la nuit.

Dans le cas du FR-A-2 294 607, il s'agit d'une installation d'alimentation d'un convecteur à deux régimes de chauffe qui sont déterminés non seulement par deux consignes différentes (l'une réglable et l'autre fixe) mais également par une alimentation du convecteur différente dans chaque cas. A cet effet, le convecteur est alimenté à travers un montage de diodes qui lui fournit soit un courant à une seule alternance, soit un courant à double alternance. Cependant, ce brevet ne décrit aucune commande centralisée et la commutation entre les régimes se fait à la main.

Alors que les trois documents analysés ci-dessus permettent d'obtenir deux régimes de chauffe seulement, il est connu également par le FR-A-2 418 421, de prévoir plus de trois consignes pour commander autant de régimes de chauffe différents. La commutation entre ces consignes est effectuée par une horloge.

L'invention a pour but de fournir un thermostat électronique destiné à commander un radiateur ou convecteur, dans lequel la commutation d'une consigne à l'autre de température peut être effectuée de façon très simple et ouvrant la possibilité d'une commande centrale facile à réaliser.

Elle a donc pour objet un thermostat électronique destiné à commander la température d'un radiateur et notamment d'un convecteur électrique, ledit thermostat comprenant, dans un montage en pont, une thermistance et un potentiomètre à commande manuelle de réglage d'une température de consigne à laquelle le thermostat doit assurer le maintien de la température du radiateur, potentiomètre qui est associé à des moyens pour décaler automatiquement le point de consigne du thermostat de façon à déterminer plusieurs régimes de fonctionnement dont notamment un régime réduit et un régime hors gel, ce thermostat étant caractérisé en ce que lesdits moyens pour décaler le point de consigne du thermostat comprennent un circuit sensible à une alternance du secteur pour permettre la sélection automatique de l'un desdits régimes ainsi qu'un circuit sensible à l'autre alternance du secteur pour permettre la sélection automatique de l'autre desdits régimes ainsi que des moyens de commutation pour appliquer sélectivement les alternances du secteur auxdits circuits.

D'autres caractéristiques et avantages de l'invention apparaîtront au cours de la description qui va suivre, donnée uniquement à titre d'exemple et faite en référence aux dessins annexés, sur lesquels :

La Figure 1 est un schéma électrique d'un thermostat électronique perfectionné suivant l'invention ;

La Figure 2 est un schéma électrique d'un autre thermostat électronique auquel est appliquée l'invention ; et

La Figure 3 est un schéma électrique d'un troisième thermostat électronique auquel est appliquée l'invention.

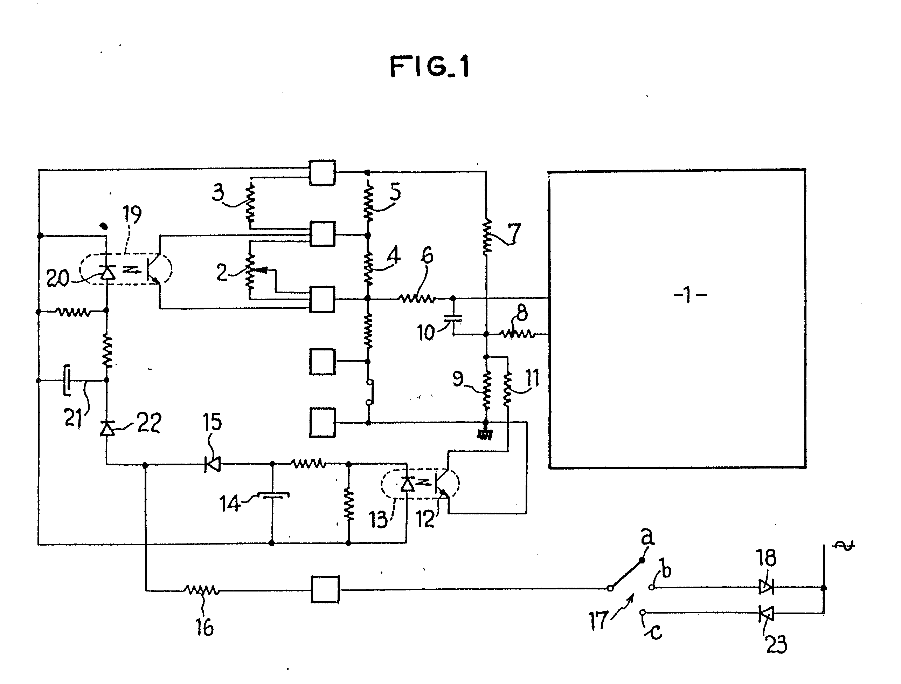

Le thermostat électronique représenté à la Fig. 1 comprend principalement un circuit électronique 1 englobant l'ensemble des fonctions connues du thermostat et que l'on ne décrira donc pas en détail. Le thermostat comporte en outre un potentiomètre 2 à réglage manuel, destiné à régler la température de consigne à laquelle le thermostat doit fonctionner, ce potentiomètre étant connecté en série avec une résistance 3 à coefficient de température négatif et formant capteur de température.

Aux bornes du potentiomètre 2 monté en rhéostat et de la résistance 3 sont respectivement connectées en parallèle des résistances 4 et 5.

Le point commun au potentiomètre 2 et à la résistance 4 est connecté à une entrée du circuit électronique 1 par l'intermédiaire d'une résistance 6.

Le point commun aux résistances 3 et 5 est connecté à une autre entrée du circuit 1 par l'intermédiaire de deux résistances en série 7 et 8. Le point de connexion des résistances 7 et 8 est relié à la masse par l'intermédiaire d'une résistance 9 qui établit avec la résistance 7 le potentiel à l'entrée correspondante du circuit 1. Ce point est en outre connecté à l'entrée du circuit 1 reliée au potentiomètre 2, par un condensateur 10.

L'invention vise à permettre la commande automatique du thermostat ainsi constitué, en vue de faire passer sa température de consigne à une ou plusieurs valeurs déterminées.

Dans le mode de réalisation représenté à la Fig. 1, il s'agit, dans un premier cas, de modifier la plage de fonctionnement du potentiomètre afin que les diverses positions de son curseur correspondent à des températures de chauffage du convecteur auquel il est associé, inférieures aux températures de fonctionnement normal.

A cet effet le circuit de la Fig. 1 comporte en parallèle sur la résistance 9 une résistance 11 connectée en série avec le trajet collecteur-émetteur d'un photo-transistor 12. Le photo-transistor est commandé par une diode électroluminescente 13 alimentée par un condensateur 14 connecté au secteur par l'intermédiaire d'une diode 15, d'une résistance de protection 16, d'un commutateur 17 et d'une diode 18 d'élimination d'une alternance du secteur, polarisée de la même façon que la diode 15.

Dans un deuxième cas, il s'agit de commander automatiquement le thermostat pour que sa température de fonctionnement passe à une valeur prédéterminée, indépendamment du réglage du potentiomètre du thermostat.

Tel est le cas par exemple lorsqu'on souhaite que le convecteur assure un chauffage minimal lorsque le local dans lequel il est installé est inoccupé pendant une période prolongée.

Afin d'assurer cette seconde fonction, un photo-transistor 19 est monté en parallèle sur le potentiomètre 2 de façon à le court-circuiter lorsqu'il est rendu conducteur. Le photo-transistor 19 est couplé à une diode électro-luminescente 20 alimentée par un condensateur 21 connecté au secteur par l'intermédiaire d'une diode 22 polarisée en sens inverse de la diode 15, de la résistance 16, du commutateur 17 et d'une diode 23 d'élimination de l'alternance du secteur opposée à celle éliminée par la diode 18.

Ainsi qu'on peut le voir au dessin, le commutateur 17 est un commutateur à trois positions a, b et c qui correspondent respectivement à trois états de fonctionnement du thermostat.

La position a est la position dite « confort ». Dans cette position les circuits de modification automatique de point de consigne ne reçoivent aucun signal et le thermostat fonctionne de la façon habituelle.

La position b correspond à un chauffage « réduit ». Quand le commutateur 17 est placé dans cette position, l'alternance négative de la tension du secteur est acheminée par les diodes 18 et 15 et appliquée au condensateur 14 qui se charge.

Lorsque le condensateur 14 est chargé à un niveau suffisant, il débite un courant dans la diode électroluminescente 13. Celle-ci excite le photo-transistor 12 dont la conduction met la résistance 11 en parallèle sur la résistance 9. Il y a donc modification du point de consigne établi par le pont diviseur formé par les résistances 7 et 9 du thermostat. La valeur de la résistance 11 détermine la différence de température entre le régime « confort » et le régime « réduit ».

La position du curseur du potentiomètre 2 continue à déterminer le point de fonctionnement du thermostat mais ce point est décalé par rapport au point de fonctionnement pour un même réglage du potentiomètre alors que le commutateur 17 se trouve dans la position « confort ».

La position c du commutateur 17 correspond à un chauffage minimum destiné à maintenir une température qui évite le gel.

Cette position est donc désignée par la Demanderesse par le terme « hors-gel ».

Lorsque le commutateur 17 est placé dans la position c, les alternances du secteur qui ne sont pas arrêtées par les diodes 23 et 22, sont appliquées au condensateur 21 dont la charge provoque le passage d'un courant dans la diode électroluminescente 20 et de ce fait la conduction du photo-transistor 19 qui met le potentiomètre 2 en court-circuit.

Le point de consigne du thermostat est alors fortement abaissé, ce qui permet d'entretenir un chauffage juste suffisant pour éviter les risques de gel.

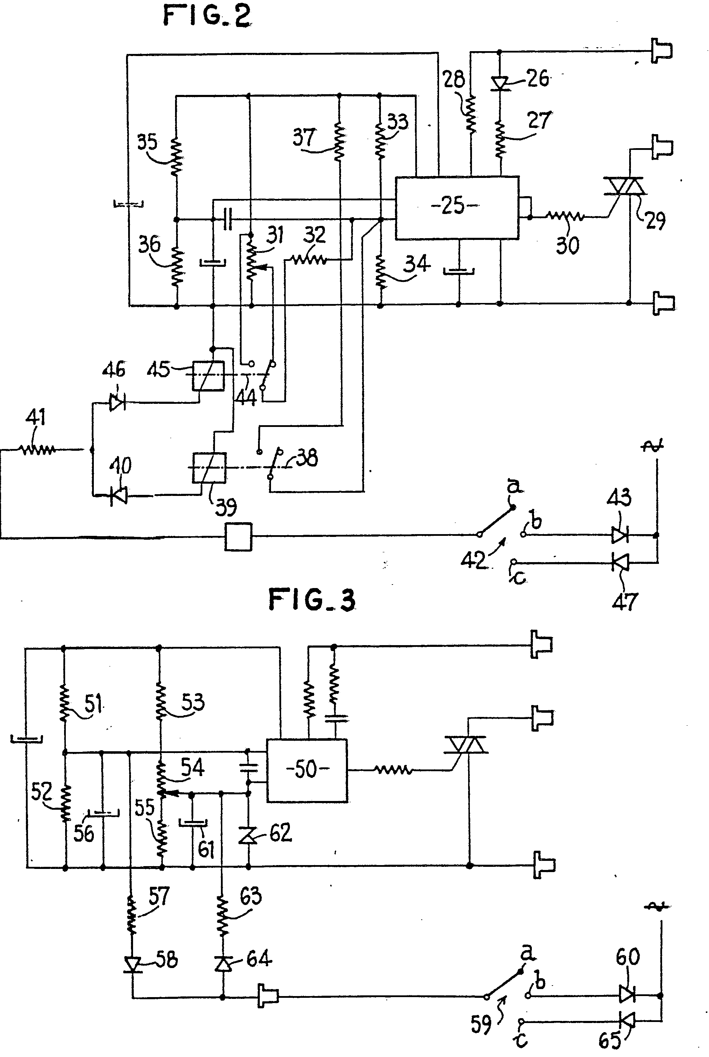

Le thermostat représenté à la Fig. 2 est construit en utilisant comme composant principal un circuit intégré TDA 1023 fabriqué et vendu par la société R.T.C. LA RADIOTECHNIQUE-COMPELEC.

Ce circuit qui est un régulateur électronique de température à bande proportionnelle fonctionnant avec une commutation au passage à zéro du secteur, est bien connu des spécialistes et ne sera pas décrit en détail.

Sur la Fig. 2 il est désigné par le numéro de référence 25. Il est alimenté à partir du secteur par l'intermédiaire d'un ensemble pourvu d'une diode 26 en série avec une résistance 27 connectée à une de ses entrées et d'une résistance 28 connectée à une autre de ses entrées.

Sa sortie est connectée à la gâchette d'un triac 29 de commande de l'alimentation d'une charge non représentée, par l'intermédiaire d'une résistance 30.

Comme dans le cas de la Fig. 1, le thermostat comporte un potentiomètre 31 de réglage de la température de fonctionnement. Le curseur du potentiomètre 31 est connecté à une entrée du circuit 25 par l'intermédiaire d'une résistance 32.

En outre un pont diviseur pourvu de deux résistances 33 et 34 est connecté à la même entrée du circuit 25.

Par ailleurs un pont diviseur pourvu d'une résistance 35 et d'un capteur 36 est connecté à une autre entrée du circuit 25.

Le circuit de la Fig. 2 comporte en outre un circuit de commande du thermostat en régime réduit.

Ce circuit comporte en parallèle sur la résistance 33 du pont diviseur précité une résistance 37 branchée en série avec un interrupteur 38 commandé par un relais 39 dont le bobinage est connecté au secteur par l'intermédiaire d'une diode 40, d'une résistance chutrice 41, d'un commutateur 42 à trois positions a, b, c semblable au commutateur 17 de la Fig. 1 et d'une diode 43 d'élimination d'une alternance du secteur.

Par ailleurs le circuit de la Fig. 2 comporte un circuit de commande du thermostat en régime « hors-gel » qui comprend un commutateur à deux positions 44 destiné à court-circuiter le potentiomètre 31 ou bien à assurer la connexion de son curseur à la résistance 32.

Le commutateur 44 est actionné par un relais 45 dont le bobinage est alimenté par une diode 46 polarisée en sens inverse de la diode 40.

La diode 46 est connectée au secteur par l'intermédiaire de la résistance 41, du commutateur 42 et d'une diode 47 d'élimination de l'autre alternance du secteur.

Le fonctionnement du circuit qui vient d'être décrit est analogue à celui du circuit de la Fig. 1.

Le rôle des photo-transistors 12 est ici tenu par l'interrupteur 38 qui, en plaçant la résistance 37 en parallèle sur la résistance 33, provoque un décalage du point de consigne du thermostat lorsque le commutateur 42 étant placé dans la position b on souhaite obtenir un fonctionnement du thermostat en régime « réduit ».

Lorsque le thermostat doit fonctionner en régime « hors-gel », le commutateur 42 est placé dans la position c, ce qui provoque l'alimentation du relais 45 par les alternances positives du secteur et le passage du commutateur 44 dans la position de court-circuit du potentiomètre 31.

Le thermostat représenté à la Fig. 3 est réalisé à l'aide d'un circuit intégré TDA 1024 fabriqué et vendu par la Société RTC LA RADIOTECHNIQUE-COMPELEC, dont la connexion au secteur et à la charge à commander est analogue à celle du circuit TDA 1023 de la Fig. 2.

Ce circuit désigné par la référence générale 50 comporte deux entrées de commande. A la première entrée du circuit 50 est connecté un pont diviseur formé d'une résistance 51 et d'un capteur de température 52 à coefficient de température négatif.

A la seconde borne d'entrée du circuit 50 est connecté un pont diviseur formé d'une résistance 53, d'un potentiomètre 54 et d'une résistance 55 connectées en série, la connexion entre le pont diviseur et ladite entrée du circuit 50 étant assurée par l'intermédiaire du curseur du potentiomètre 54. Le circuit de commande de fonctionnement en régime « réduit » comprend un condensateur 56, normalement chargé, connecté au secteur par l'intermédiaire d'une résistance 57, d'une diode 58, d'un commutateur à trois positions 59 et d'une diode 60 d'élimination d'une alternance du secteur.

Le circuit de commande du fonctionnement du thermostat en régime « hors-gel » comprend un condensateur 61 connecté entre le curseur du potentiomètre 54 et la masse à laquelle sont également connectés, par une de leurs bornes, le capteur 52, le condensateur 56 et la résistance 55. Le circuit de commande du régime « hors-gel » comporte en outre une diode Zener 62 connectée en parallèle sur le condensateur 61.

La borne du condensateur 61 connectée à l'entrée correspondante du circuit 50 est reliée au secteur par l'intermédiaire d'une résistance 63, d'une diode 64, du commutateur 59 et d'une diode 65 d'élimination de l'autre alternance du secteur.

Le fonctionnement du circuit de la Fig. 3 est le suivant.

Lorsque le commutateur se trouve dans la position a, aucun signal n'est appliqué à la borne de commande du thermostat. Le condensateur 61 est chargé par le pont 53, 54, 55 et la tension à ses bornes est celle donnée par la position du curseur du potentiomètre 54.

Le fonctionnement du thermostat n'est pas modifié.

Lorsque le commutateur 59 est dans la position b, l'alternance négative du secteur est appliquée par l'intermédiaire de la diode 58 et de la résistance 57, au condensateur 56 et décharge légèrement ce condensateur qui est chargé positivement par le pont diviseur 51, 52.

Suivant la valeur de la résistance 57, la décharge partielle du condensateur 56 est plus ou moins importante et détermine la différence de température entre la position « Confort » et la position « Réduit ».

Lorsque le commutateur 59 est placé dans la position c, le condensateur 61 est chargé par la diode 64 et la résistance 63.

La charge du condensateur 61 bien qu'étant supérieure à celle obtenue en régime « Confort » (position a du commutateur 59) est limitée par la tension de Zener de la diode 62 de sorte que la consigne appliquée au circuit 50 fait fonctionner ce circuit en régime de basse température dit « hors-gel ».

Dans les modes de réalisation qui viennent d'être décrits le thermostat comporte deux circuits de commande automatique de fonctionnement dans deux régimes choisis.

On peut cependant aisément envisager de réaliser des thermostats pourvus d'un plus grand nombre de tels circuits de commande automatique.

Par ailleurs, on comprendra que le thermostat suivant l'invention peut être utilisé aussi bien pour commander des convecteurs électriques que des radiateurs d'une autre nature.

## Revendications

1. Thermostat électronique (1 ; 25 ; 50) destiné à commander la température d'un radiateur et notamment d'un convecteur électrique, ledit thermostat comprenant, dans un montage en pont, une thermistance et un potentiomètre (2 ; 31 ; 54) à commande manuelle de réglage d'une température de consigne à laquelle le thermostat doit assurer le maintien de la température du radiateur, potentiomètre qui est associé à des moyens pour décaler automatiquement le point de consigne du thermostat de façon à déterminer plusieurs régimes de fonctionnement dont notamment un régime réduit et un régime hors gel, ce thermostat étant caractérisé en ce que lesdits moyens pour décaler le point de consigne du thermostat comprennent un circuit (15 à 18 ; 40 à 43 ; 58 à 60) sensible à une alternance du secteur pour permettre la sélection automatique de l'un desdits régimes ainsi qu'un circuit (19, 20 ; 44, 45 ; 61, 62) sensible à l'autre alternance du secteur pour permettre la sélection automatique de l'autre desdits régimes ainsi que des moyens de commutation (17 ; 42 ; 59) pour appliquer sélectivement les alternances du secteur auxdits circuits.

2. Thermostat suivant la revendication 1, caractérisé en ce que l'un des circuits sensibles à une alternance du secteur est associé audit potentiomètre (2 ; 31 ; 54) par l'intermédiaire d'un circuit d'inhibition (19, 20 ; 44, 45 ; 61, 62) de ce dernier.

3. Thermostat suivant la revendication 1, caractérisé en ce que le ou l'un des points de consigne étant établi par un pont diviseur formé de résistances (7, 8) les moyens de décalage du point de consigne comprennent en parallèle sur l'une des résistances (9) du pont une résistance (11) connectée en série avec le trajet émetteur-collecteur d'un phototransistor (12) commandé par une diode électroluminescente (13) alimentée par un condensateur (14) connecté audit circuit (15, 16, 17, 18) sensible à une alternance du secteur.

4. Thermostat suivant la revendication 2, caractérisé en ce que le ou l'un des points de consigne étant établi par inhibition du potentiomètre à commande manuelle (2), le circuit d'inhibition dudit potentiomètre comprend un phototransistor (19) dont le trajet émetteur-collecteur est branché en parallèle sur ledit potentiomètre (2) et qui est commandé par une diode électroluminescente (20) alimentée par un condensateur (21) chargé par ledit circuit (22, 16, 17, 23) sensible à l'autre alternance du secteur.

5. Thermostat suivant la revendication 1, caractérisé en ce que le ou l'un des points de consigne étant établi par un pont diviseur formé de résistances (33, 34), les moyens de décalage du point de consigne comprennent en parallèle sur une résistance (33) du pont, une résistance (37) branchée en série avec un interrupteur (38) commandé par un relais (39) dont le bobinage est alimenté par ledit circuit (40, 41, 42, 43) sensible à une alternance du secteur.

6. Thermostat suivant la revendication 2, caractérisé en ce que le ou l'un des points de consigne étant établi par inhibition du potentiomètre à commande manuelle (31), le circuit d'inhibition dudit potentiomètre comprend un commutateur (44) de mise en court-circuit dudit potentiomètre, commandé par un relais (45) dont le bobinage est alimenté par ledit circuit (46, 41, 42, 47) sensible à l'autre alternance du secteur.

7. Thermostat suivant la revendication 1, caractérisé en ce que le ou l'un des points de consigne étant établi par un pont diviseur (51, 52), le circuit de décalage dudit point de consigne comprend en parallèle sur l'un des éléments du pont diviseur un condensateur (56) alimenté à travers une résistance (57) par ledit circuit (58, 59, 60) sensible à l'une des alternances du secteur.

8. Thermostat suivant la revendication 2, caractérisé en ce que le ou l'un des points de consigne étant établi par inhibition du potentiomètre à commande manuelle (54), le circuit d'inhibition comprend un condensateur (61) connecté entre le curseur du potentiomètre (54) et la masse et une diode Zener (62) connectée en parallèle sur le condensateur (61), la tension Zener de ladite diode étant égale à la tension correspondant au point de consigne à établir, ledit condensateur étant connecté au secteur par l'intermédiaire dudit circuit (63, 64, 59, 65) sensible à l'autre alternance du secteur.

9. Thermostat suivant l'une quelconque des revendications 1 à 8, caractérisé en ce que ledit circuit sensible à une alternance du secteur comprend une première diode (15 ; 40 ; 58) connectée en série avec un commutateur (17 ; 42 ; 59) à trois positions et avec une seconde diode (18 ; 43 ; 60) polarisée dans le même sens que la première, tandis que ledit circuit sensible à l'autre alternance du secteur comprend une troisième diode (22 ; 46 ; 64) polarisée en sens inverse de la première diode, ledit commutateur à trois positions et une quatrième diode (23 ; 47 ; 65) polarisée dans le même sens que la troisième.

## Claims

1. An electronic thermostat (1 ; 25 ; 50) for controlling the temperature of a radiator and in particular an electric convector, said thermostat comprising, in a bridge circuit, a thermistor and a potentiometer (2 ; 31 ; 54) which is manually controlled and regulates a set temperature at which the thermostat must maintain the temperature of the regulator, this potentiometer being associated with means for automatically shifting the set point of the thermostat so as to determine a plurality of rates of operation including in particular a low rate and an antifreeze rate, this thermostat being characterised in that said means for shifting the set point of the thermostat comprise a circuit (15 to 18 ; 40 to 43 ; 58 to 60) responsive to an alternation of the mains supply so as to permit the automatic selection of one of said rates of operation and a circuit (19, 20 ; 44, 45 ; 61, 62) responsive to the other alternation of the mains supply so as to permit the automatic selection of the other of said rates of operation, and switching means (17 ; 42 ; 59) for selectively applying the alternations of the mains supply to said circuits.

2. A thermostat according to claim 1, characterised in that one of the circuits responsive to an alternation of the mains supply is associated with said potentiometer (2 ; 31 ; 54) through an inhibition circuit (19, 20 ; 44, 45 ; 61, 62) for the latter.

3. A thermostat according to claim 1, characterised in that the or one of the set points is established by a dividing bridge formed by resistors (7, 8) and the means for shifting the set point comprise, in parallel with one of the resistors (9) of the bridge, a resistor (11) connected in series with the emitter-collector path of a photo-transistor (12) controlled by an electroluminescent diode (13) fed by a capacitor (14) connected to said circuit (15, 16, 17, 18) responsive to an alternation of the main supply.

4. A thermostat according to claim 2, characterised in that the or one of the set points is established by inhibition of the manually controlled potentiometer (2) and the circuit inhibiting said potentiometer comprises a phototransistor (19) whose emitter-collector path is connected in parallel to said potentiometer (2) and is controlled by an electroluminescent diode (20) fed by a capacitor (21) charged by said circuit (22, 16, 17, 23) responsive to the other alternation of the main supply.

5. A thermostat according to claim 1, characterised in that the or one of the set points is established by a dividing bridge formed by resistors (33, 34), and the means for shifting the set point comprise in parallel with a resistor (33) of the bridge, a resistor (37) connected in series with a switch (38) controlled by a relay (39) whose coil is fed by said circuit (40, 41, 42, 43) responsive to an alternation of the mains supply.

6. A thermostat according to claim 2, characterised in that the or one of the set points is established by inhibition of the manually controlled potentiometer (31) and the circuit for inhibiting said potentiometer comprises a switch (44) for shorting said potentiometer controlled by a relay (45) whose coil is fed by said circuit (46, 41, 42, 47) responsive to the other alternation of the mains supply.

7. A thermostat according to claim 1, characterised in that the or one of the set points is established by a dividing bridge (51, 52), and the circuit for shifting said set point comprises, in parallel with one of the elements of the dividing bridge, a capacitor (56) fed through a resistor (57) by said circuit (58, 59, 60) responsive to one of the alternations of the mains supply.

8. A thermostat according to claim 2, characterised in that the or one of the set points is established by inhibition of the manually controlled potentiometer (54) and the inhibition circuit comprises a capacitor (51) connected between the slide of the potentiometer (54) and earth and a Zener diode (62) connected in parallel to the capacitor (61), the Zener voltage of said diode being equal to the corresponding voltage at the set point to be established, said capacitor being connected to the mains supply through said circuit (63, 64, 59, 65) responsive to the other alternation of the mains supply.

9. A thermostat according to any one of the claims 1 to 8, characterised in that said circuit responsive to an alternation of the mains supply comprises a first diode (15 ; 40 ; 58) connected in series with a switch (17 ; 42 ; 59) having three positions and with a second diode (18 ; 43 ; 60) polarized in the same direction as the first diode while said circuit responsive to the other alternation of the main supply comprises a third diode (22 ; 46 ; 64) polarized in the opposite direction to the first diode, said switch having three positions and a fourth diode (23 ; 47 ; 45) polarized in the same direction as the third diode.

**Ansprüche**

1. Elektronisches Thermostat (1 ; 25 ; 50) zum Steuern eines Heizkörpers und insbesondere eines elektrischen Konvektionsofens, das in einer Brückenschaltung einen Thermowiderstand und ein manuell einstellbares Potentiometer (2 ; 31 ; 54) zum Einstellen einer Solltemperatur, auf der der Thermostat die Temperatur des Heizkörpers halten soll, aufweist, wobei das Potentiometer mit Mitteln zum automatischen Verschieben des Sollwerts des Thermostaten verbunden ist, um so mehrere Betriebszustände zu bestimmen, insbesondere einen reduzierten Betriebszustand und einen Betriebszustand zur Verhinderung des Einfrierens, dadurch gekennzeichnet, daß die Mittel zum Verschieben des Sollwerts des Thermostaten eine Schaltung (15-18 ; 40-43 ; 58-60), die auf eine Halbschwingung der Netzspannung anspricht, um die automatische Auswahl eines der Betriebszustände zu ermöglichen, sowie eine Schaltung (19, 20 ; 44, 45 ; 61, 62), die auf die andere Halbschwingung der Netzspannung anspricht, um die automatische Auswahl des anderen Betriebszustands zu ermöglichen, und Umschalter (17 ; 42 ; 59) zum wahlweisen Anlegen der Halbschwingungen der Netzspannung an die Schaltungen aufweisen.

2. Thermostat nach Anspruch 1, dadurch gekennzeichnet, daß eine der auf eine Halbschwingung der Netzspannung ansprechenden Schaltungen über eine Sperrschaltung (19, 20 ; 44, 45 ; 61, 62) des Potentiometers (2 ; 31 ; 54) mit diesem verbunden ist.

3. Thermostat nach Anspruch 1, dadurch gekennzeichnet, daß der oder einer der Sollwerte von einem aus Widerständen (7, 9) gebildeten Spannungsteiler bestimmt ist und die Mittel zum Verschieben des Sollwerts einen parallel zu einem (9) der Widerstände des Spannungsteilers geschalteten Widerstand (11) aufweisen, der zu dem Emitter-Kollektorweg eines Phototransistors (12) in Reihe geschaltet ist, wobei der Phototransistor (12) von einer Elektrolumineszenz-Diode (13) gesteuert wird, die von einem Kondensator (14) versorgt wird, der mit der auf eine Halbschwingung ansprechenden Schaltung (15, 16, 17, 18) verbunden ist.

4. Thermostat nach Anspruch 2, dadurch gekennzeichnet, daß der oder einer der Sollwerte durch Sperren des manuell einstellbaren Potentiometers (2) bestimmt ist und die Sperrschaltung des Potentiometers einen Phototransistor (19) aufweist, dessen Emitter-Kollektorweg parallel zum Potentiometer (2) geschaltet ist und der von einer Elektro-Lumineszenz-Diode (20) gesteuert wird, die von einem Kondensator (21) gespeist wird, der von der auf die andere Halbschwingung der Netzspannung ansprechenden Schaltung (22, 16, 17, 23) aufgeladen wird.

5. Thermostat nach Anspruch 1, dadurch gekennzeichnet, daß der oder einer der Sollwerte von einem aus Widerständen (33, 34) gebildeten Spannungsteiler bestimmt wird, und die Mittel zum Verschieben des Sollwerts in Parallelschaltung zu einem (33) der Widerstände des Spannungsteilers einen Widerstand (37) aufweisen, der mit einem Schalter (38) in Reihe geschaltet ist, der von einem Relais (39) gesteuert wird, dessen Wicklung von der Schaltung (40, 41, 42, 43) gespeist wird, die auf eine Halbschwingung der Netzspannung anspricht.

6. Thermostat nach Anspruch 2, dadurch gekennzeichnet, daß der oder einer der Sollwerte durch Sperren des manuell bedienbaren Potentiometers (31) bestimmt wird, und die Sperrschaltung des Potentiometers einen Umschalter (44) zum Kurzschließen des Potentiometers aufweist, der von einem Relais (45) gesteuert wird, dessen Wicklung von der Schaltung (46, 41, 42, 47) gespeist wird, die auf die andere Halbschwingung der Netzspannung anspricht.

7. Thermostat nach Anspruch 1, dadurch gekennzeichnet, daß der oder einer der Sollwerte von einem Spannungsteiler (51, 52) bestimmt wird, und die Schaltung zum Verschieben dieses Sollwerts in Parallelschaltung zu einem der Elemente des Spannungsteilers einen Kondensator (56) aufweist, der über einen Widerstand (57) von der auf eine Halbschwingung der Netzspannung ansprechenden Schaltung (58, 59, 60) gespeist wird.

8. Thermostat nach Anspruch 2, dadurch gekennzeichnet, daß der oder einer der Sollwerte durch Sperren des manuell bedienbaren Potentiometers (54) bestimmt wird, und die Sperrschaltung einen Kondensator (61), der zwischen dem Abgriffschieber des Potentiometers (54) und der Masse geschaltet ist, und eine parallel zum Kondensator (61) geschaltete Zener-Diode (62) aufweist, wobei die Zener-Spannung der Diode gleich der dem zu bestimmenden Sollwert entsprechenden Spannung ist, und wobei der Kondensator über die auf die andere Halbschwingung der Netzspannung ansprechende Schaltung (63, 64, 59, 65) mit dem Netz verbunden ist.

9. Thermostat nach einem der Ansprüche 1 bis 8, dadurch gekennzeichnet, daß die auf eine Halbschwingung der Netzspannung ansprechende Schaltung eine erste Diode (15 ; 40 ; 58) aufweist, die mit einem Dreistellungs-Umschalter (17 ; 42 ; 59) und mit einer in der gleichen Richtung wie die erste Diode gepolten zweiten Diode (18 ; 43 ; 60) in Reihe geschaltet ist, während die auf die andere Halbschwingung der Netzspannung ansprechende Schaltung eine dritte Diode (22 ; 46 ; 64) aufweist, die in umgekehrter Richtung zu der ersten Diode gepolt ist, wobei der Dreistellungs-Umschalter und eine vierte Diode (23 ; 47 ; 65) in der gleichen Richtung wie die dritte Diode gepolt sind.

FIG_1

0 034 535

FIG. 2

FIG. 3